# EUROPEAN PATENT SPECIFICATION

(11) **EP 2 633 688 B1**
(45) Date of publication and mention of the grant of the patent: **02.05.2018**
(21) Application number: 11775942.3
(22) Date of filing: 26.10.2011
(51) Int. Cl.: H04N 13/00

(54) **METHOD FOR GENERATION OF THREE-DIMENSIONAL IMAGES ENCRUSTING A GRAPHIC OBJECT IN THE IMAGE AND AN ASSOCIATED DISPLAY DEVICE**
VERFAHREN ZUR ERZEUGUNG DREIDIMENSIONALER BILDER MIT EINEM EINGEBETTETEN GRAFISCHEN OBJEKT IM BILD UND ZUGEHÖRIGE ANZEIGEVORRICHTUNG
PROCÉDÉ POUR GÉNÉRER DES IMAGES EN TROIS DIMENSIONS EN INCRUSTANT UN OBJET GRAPHIQUE DANS L'IMAGE ET DISPOSITIF D'AFFICHAGE ASSOCIÉ

(30) Priority: 29.10.2010 FR 1058966
(43) Date of publication of application: 04.09.2013
(73) Proprietor: Thomson Licensing DTV, 92130 Issy-les-Moulineaux (FR)
(72) Inventor: THIEBAUD, Sylvain, F-35510 Cesson-Sévigné (FR); VERDIER, Alain, F-35510 Cesson-Sévigné (FR); DOYEN, Didier, F-35510 Cesson-Sévigné (FR)
(74) Representative: Amor, Rim
(86) International application number: PCT/EP2011/068698
(87) International publication number: WO 2012/055892

(56) References cited:
- EP-A1- 1 970 887
- EP-A2- 2 106 150
- WO-A1-2009/152769
- WO-A1-2010/010499
- WO-A1-2010/095074
- WO-A2-2009/031872
- JP-A- 2004 328 566

## Description

The invention relates to a method for displaying a three dimensional (3D) document on a screen able to display such images and a device for generating display signals according to said method.

Currently there are several methods used in video processing to restore a perception of relief, for example there is stereoscopy. In stereoscopy, two views of a same scene are recorded, with two different video cameras or two different still cameras, from two different viewpoints laterally offset with respect to one another. For 3D viewing by a spectator, these two views, called right and left view, of the same scene are displayed on a same screen of a display device, a PDP (Plasma Display Panel) or LCD (Liquid Crystal Display) type screen or a video-projector screen is used. The spectator typically wears glasses adapted to transmit to each eye the view that corresponds to it.

The perception of relief in a 3D image displayed on such a screen depends directly on the disparity of left and right images, that is to say the distance (that can be measured in the number of pixels for example) separating two pixels representing the same object element of the recorded scene, one intended to be perceived by the left eye and the other intended to be perceived by the right eye. These pixels represent the same video information at the level of the display device, that is to say they represent the same object element of the recorded scene.

The disparity values associated with the object elements of a 3D image correspond to the position deviation on a horizontal axis of these elements in the left image and the right image of a film or video. The disparity depends particularly on the distance of objects between the recorded scene and the recording cameras and the distance between the left and right cameras. In general, these two cameras are for example separated by a distance at least equal to 6.5 cm, as this distance corresponds to the average distance separating the eyes of an individual.

If an object is located behind another object, the parts of the object situated behind the other are hidden for one eye though it may be visible to the other eye, as the object placed in front of the other does not mask the same parts depending on whether it is viewed by one eye or the other. This phenomenon called "occlusion" also enables the brain to deduce that an object is situated behind another object and is thus at a different depth. According to the angle of vision of the 3D scene, an object can be masked or not by an object placed in front. In 3D, the occluded object thus has a greater depth (perceived behind) than the occulting object. In a two-dimensional (2D) image the same image is perceived by the two eyes, whatever the angle from which the objects of the image are viewed, possible occlusions are maintained and a 2D image does not give the spectator a stereoscopic perception of depth.

A 3D sequence typically contains objects at diverse depths in particular objects perceived behind the screen and others perceived in front of the screen. To display a graphic object notably using an OSD (On Screen Display) circuit superimposed onto the image displayed on a screen, where this graphic object represents for example a parameter configuration menu for a display device, a logo, a score panel or a diverse element of textual information, the graphic object must preferably be inserted in such a way that it appears in front of said images. A disparity should thus be applied to this graphic object so that it is perceived in the foreground. But the readability of texts and graphic objects is then reduced in that a certain convergence time is required for the eyes of the spectator to pass from the 3D scene to this graphic object. This results in visual discomfort and ocular fatigue.

A first solution to this problem consists in applying these graphic objects with a low disparity, that is to say in inserting them at screen level. It the occlusion problems are now taken into account, the graphic object inserted in the displayed image then risks being masked by objects of the 3D image displayed and will only appear in part. The visual display thus provokes a high level of discomfort in perception as the graphic objects positioned behind these objects risk being masked by them.

The Philips patent application WO2008/038205 discusses a method for placing the graphic objects in front of objects of the 3D scene. The part of the scene perceived as furthest from the observer (called "first sub-range" in this patent application) is dedicated to video, while the second part closer to the observer (second sub-range) is dedicated to graphics. As a result, there can be no occlusion of graphic data by the video, as in thus assigning to them a part of the scene, the graphic objects are always placed in the foreground. This method resolves possible occlusion problems of graphics by the video but at the price of a reduction in the range of depths of the whole of the video. Document WO2009/031872 A2 combines 3D images with 2D content wherein the 2D content has zero disparity and is displayed at the depth level of the display. Document EP1970887 A1 describes an apparatus which combines 3D image content with a 2D image in a retinal scanning display wherein a transition region is displayed between the 3D content and 2D image, and wherein the depth of the image elements in the transition region is gradually changing. The present invention proposes another method for inserting graphic objects while avoiding as much as possible limiting of the depth of the video document while retaining a good level of visual comfort.

The purpose of the present invention consists in a method for generation of three-dimensional image signals as set out in independent claim 1 comprising a step of insertion of a graphic object in the three-dimensional image signals, the method being characterized in that it also comprises:
- a step of determining an interpolation zone defined by the contour around the inserted graphic object, said interpolation zone having a determined thickness,
- a step of processing of pixels placed on the interpolation zone, the depth of said pixels being increased little by little from the exterior edge of the contour to the internal edge of the contour of the graphic element to be inserted, the pixels on the internal edge of the contour being placed at a depth greater than that of the inserted object.

By retaining a variation of depth of objects of the 3D scene situated around the inserted object, the user continues to perceive the depth around the inserted object, while easily viewing the inserted graphic object and while minimizing the visual discomfort.

According to a first improvement, the depth variation applied to each pixel of the interpolation zone is a function the distance between this pixel and the internal edge of the contour, the function being one of the following functions: linear, trigonometric, parabolic. In this way, it is possible to better attenuate the variation in depth at the edge of the inserted object and reduce the visual impact of too great variations in depth. According to another improvement, the method comprises a step of reception of data associated with a graphic object, said received data comprising among other elements the width of the interpolation zone around the inserted graphic object. In this way, the receiver has parameters customized to the graphic object enabling it to be better inserted into the video image. According to a variant, the received data comprise the ratio between the distance of the object to be inserted and the screen, and the distance between the observer and the screen. In this way, the receiver possesses the parameters associated with the graphic object for a customized display on the screen.

According to another improvement, the method comprises a step of introduction of a command to adjust the depth of the inserted graphic object. In this way, the depth of the inserted object can be adjusted by the user for his greater visual comfort. According to a further improvement on this improvement, the width of the interpolation zone depends upon the adjustment to adjust the depth of the graphic object introduced by the user.

According to another improvement, the width of the interpolation zone around the inserted graphic object is variable. In this way, the interpolation zone can adapt to the shape of the inserted object, as well as to its 3D aspect if the inserted object is three-dimensional.

The purpose of the present invention is also a device for generation of three-dimensional image signals, as set out in independent claim 5 comprising a means of insertion of a graphic object in the three-dimensional image signals, characterized in that it comprises:
- a means of determining an interpolation zone defined by the contour around the inserted graphic object, said contour having a determined thickness,
- said means of insertion modifying the depth of pixels placed on the contour of the graphic object, the depth of said pixels being little by little increased from the external edge of the contour as far as the internal edge of the contour of the graphic object to be inserted, the pixels on the internal edge of the contour being placed at a depth greater than that of the inserted object.

The invention, with its characteristics and advantages, will be revealed more clearly on reading the description of a particular non-restrictive embodiment referring to figures in the appendix wherein:
- figure 1 is a block diagram of a receiver enabling the 3D images to be displayed according to an embodiment of the invention,
- figures 2a - 2d are schemas showing the depth of linear elements of a 3D image and the modification of the depth of said elements when a graphic object is inserted,
- figure 3 shows the screen of a receiver displaying a 3D image and the graphic object inserted according to the invention,
- figure 4 shows an example of the interpolation zone of a graphic object in a 3D image as well as graphics representing the depth of elements of this zone.

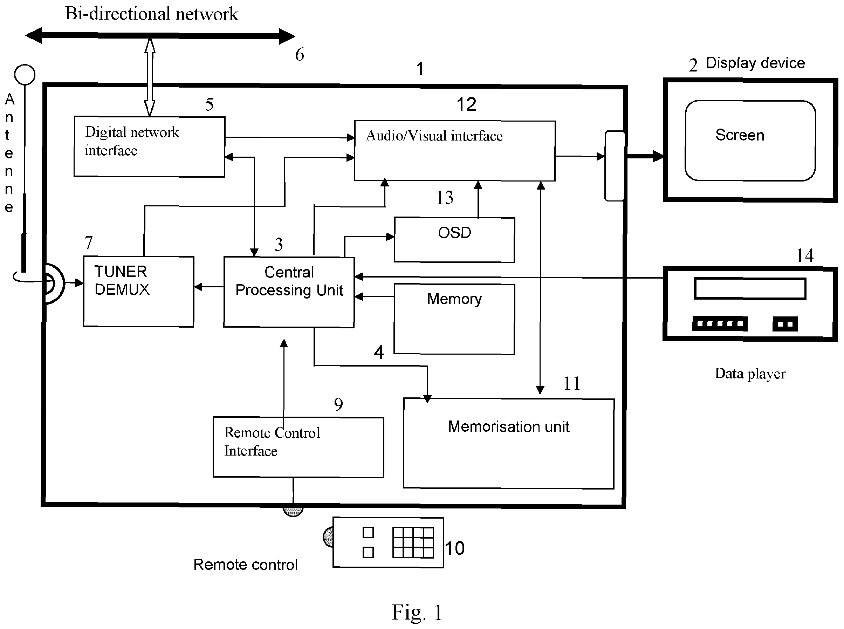

Figure 1 shows a receiver 1 connected to a display device 2 comprising a display screen. This display device could be a video-projector, a television screen or any screen for 3D content. The receiver 1 is for example a 3D television receiver or a 3D audiovisual terminal. Communication means transmit the data stream via a broadband network. The receiver 1 comprises a central processing unit 3 connected to, among others, a memory 4, a reception interface of commands 9 transmitted for example by a remote control 10. The receiver also comprises reception means such as an antenna associated with a tuner and a demultiplexor 7 to receive 3D content data transmitted via a broadcast network. One variant consists in equipping the receiver with an interface 5 for communication with a broadband digital network 6 to receive 3D data contents.

The receiver 1 also comprises a memorisation unit 11 for the storage of 3D contents. The memorisation support used is for example a random access memory, a hard disk or an optical disk. The receiver 1 can also be connected to a data reader for example a DVD or Blue Ray player 14, or have an integrated DVD or Blue Ray player. The receiver also comprises an OSD (On Screen Display) circuit 13 to display data on the screen. The OSD is controlled by a Central Processing Unit 3 in association with an executable programme recorded in the memory 4. An interface 12 enables interfacing with data from the OSD circuit to the video data. The receiver 1 can also be integrated with the display device 2.

The receiver 1 receives data corresponding to a 3D visual content and transmits data corresponding to the visual content adapted on the display device 2. The OSD circuit 13 receives from the central processing unit 3 commands in order to into the 3D visual content at least one graphic object positioned in at least one insertion window on the display screen. These graphic objects require good readability.

By "graphic object" is understood any set of characters or symbols to be reproduced graphically.

A contour corresponding to the insertion window in the 3D image delimits for example this set of characters and symbols. In an example according to the invention, the internal zone delimited by this contour and comprising a set of letters or symbols as well as background elements are part of the graphic object to be inserted. In another example according to the invention the graphic object to be inserted is limited to this set of characters or symbols.

This graphic object is for example a 2D representation. In another example according to the invention, the graphic object, only or with the elements included in its contour, is a 3D representation.

One purpose of the invention is that the inserted graphic object is not occluded by an element of this image.

A disparity map of the image to be displayed is determined in a way known in itself by the central processing unit or transmitted via a data stream, where a disparity value is associated with each element of the image of the right or left view. The corresponding depth of all elements of the 3D image of the transmitted content to be displayed is thus determined. A positive disparity corresponds to the image elements situated behind the screen while a negative disparity corresponds to image elements situated in front of the screen.

If according to one of the examples according to the invention the graphic object to be inserted is limited to a set of characters or symbols, the invention consists initially in modifying the depth values of 3D image elements in the insertion window of the graphic object to be inserted, that is to say inside the contour defined around this graphic object. The disparity of corresponding elements of this image part is modified by interpolation, so that this image part is situated at a depth close to the depth corresponding to the plane of the screen without having the depth of the screen. The disparity of these elements will thus be slightly positive so that the insertion of the graphic element is not occluded by these image elements.

The invention also relates to the insertion of several graphic objects on a 3D image.

In order to avoid an abrupt depth change between the image part delimited by the contour of the graphic element to be inserted and the rest of the image, a transition zone is created according to the invention around the contour of the graphic element. This zone comprises a first interior edge corresponding to the contour of the graphic object then a second exterior edge distant by a width that is determined according to different parameters, such as the depth deviation between the two parts of the image or the display desired. The more this zone is wide the more the depth transition will be gradual. The interior edge corresponding to the contour has a form that is quadratic, circular or oval. The exterior edge is preferably of the same form as the interior edge. In other examples the exterior edge is of a different form to the interior edge. For example, an exterior oval edge can be associated with an interior rectangular edge.

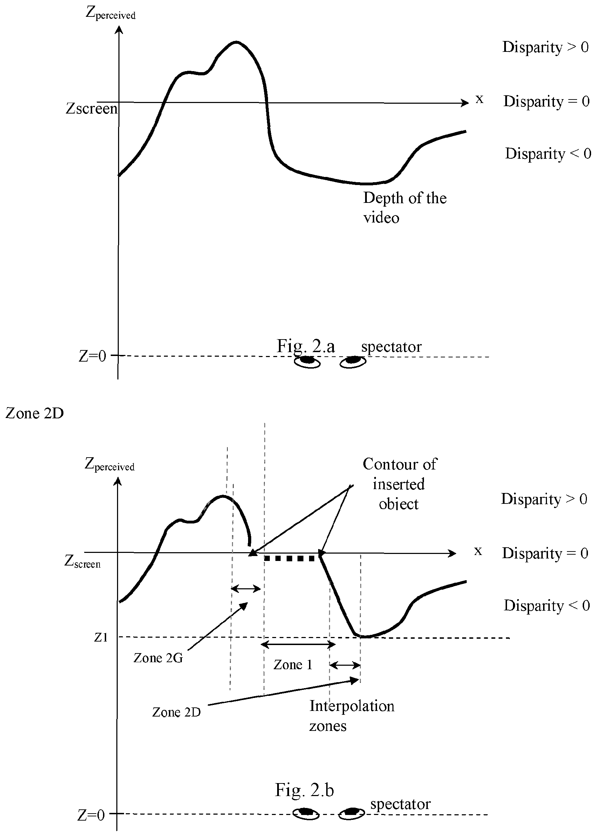

Figures 2a and 2b represent respectively graphics of the depth of object elements of a 3D image extracted from the video document according to the position of these elements on a horizontal axis and the depth of object elements of the same image after processing and insertion of a 2D graphic object.

As shown by figure 2a, the object elements shown have a variable depth (perceived Z) that enables them to be situated either in front of, or behind the screen, the screen depth corresponding to the dotted ordinate line Z_{screen}.

As shown by figure 2b, a graphic object is inserted at the depth level of the screen and is represented by the points of the dotted line at the depth Z of the screen. The disparity of elements of this graphic object is thus null. It is inserted in the zone defined as zone 1.

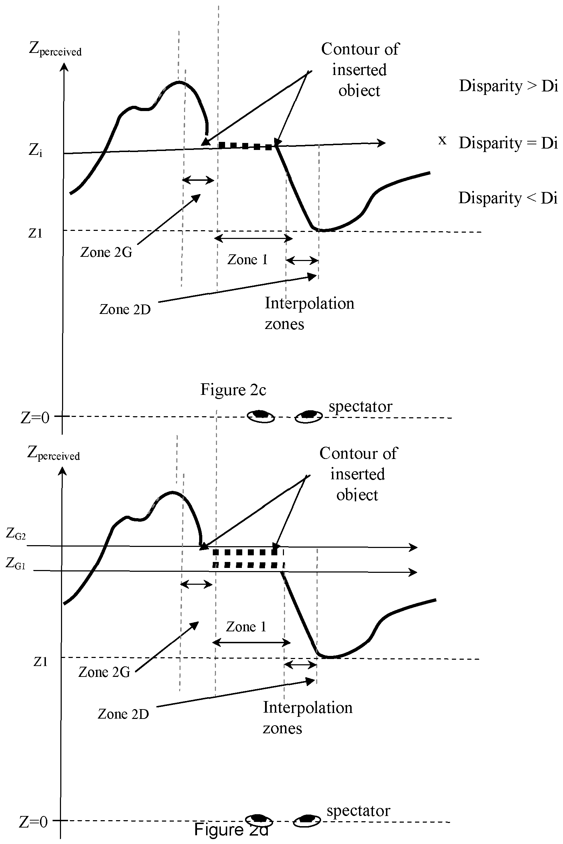

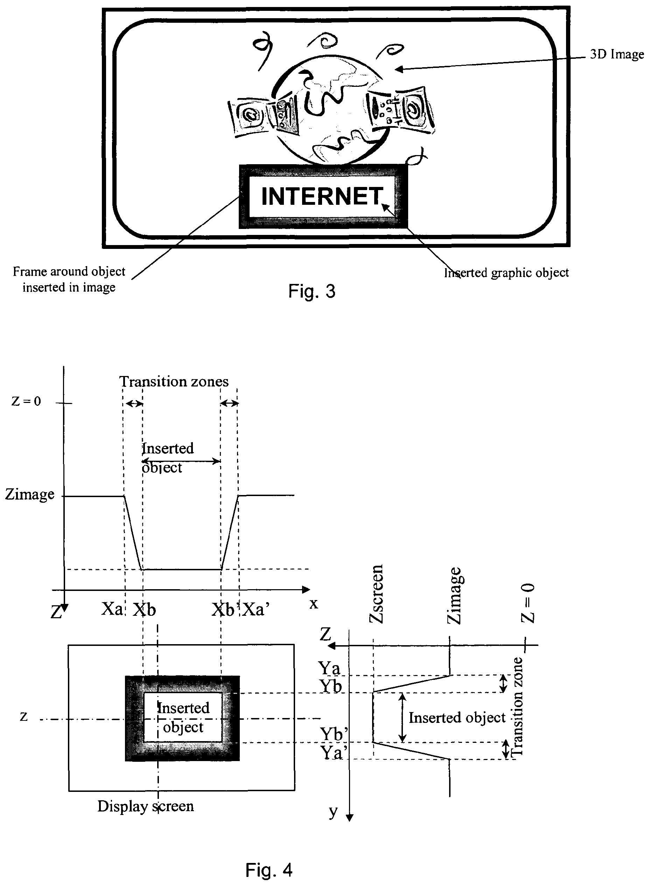

The transition zone is shown by a rectangular frame of defined width, as is also shown by figure 3, around the graphic element to be inserted. At the level of the graphic of figure 2 corresponding to a horizontal line according to the axis x of the central part of the insertion window, this transition zone is shown by a right zone called the 2D zone and a left zone called the 2G zone.

Initially and if necessary, the 3D image portion situated inside the contour if the graphic object to be inserted is interpolated in a way so that the disparity value of elements of this image portion has a positive value close to zero. The inserted graphic object is thus positioned in front of the elements of this 3D image portion. Advantageously, there is thus no conflict and thus no visual discomfort.

Figure 2b also shows the depth of elements of the frame situated around the graphic object to be inserted. To the right of the object to be inserted, there is within the width of this frame the 2D transition zone where the 3D image is modified.

In fact the image elements of this zone are situated between those of the graphic object to be inserted and those of the re-transmitted 3D image. To avoid visual discomfort, the modification of the depth of elements of the scene situated in this zone is preferably progressive all around the object to be inserted.

A transition between the depth of the graphic object to be inserted and that of the 3D image is thus produced. The depth of elements of this zone will be adapted progressively from the depth value of elements situated on the interior edge towards the depth value of elements situated on the exterior edge. This progressive adaptation is for example linear or gradual.

On the scheme of figure 2b, in the 2D transition zone situated on the right edge of the graphic object, the depth of elements varies from a depth value Z1 corresponding to the initial depth of the element of the exterior edge of the transition zone to a value Z_{screen}. In the 2G transition zone situated on the left edge of the graphic object, the depth of elements is greater than (positive disparity) the depth Z_{screen}. On this side of the graphic object, there is thus no risk of occlusion and it is not necessary to adapt the depth value of elements of this transition zone 2G.

The progressiveness of the adaptation of depth values depends on the width of this transition zone. The greater the disparity between the depth values, the more it is advisable to increase the width of this zone. The width is determined notably in the number of pixels.

According to a variant of the invention represented by the graphic of figure 2c, the object is inserted at a depth Zi different to that of the screen. In the transition zone, the depth of elements varies progressively from a depth value Z1 or Z2 corresponding to the depth of the element of the exterior edge of the transition zone to an insertion value Zi.

In another example, the graphic object to be inserted is a 3D representation of depth defined as ZG2 - ZG1 corresponding to the difference between the depth of the deepest element and that of the least deep element of this graphic object. For reasons of simplicity, the insertion of this graphic object is done by adapting its insertion in a way so that the depth elements corresponding to the average value of depth differences ½ (ZG2-ZG1) situated at screen level or at a defined level. This case is represented by figure 2d. The limit values of the transition zone correspond to these values as shown in figure 2d. The depth of image elements of this zone will be progressively adapted from the depth value of the image on the exterior edge of the zone to the depth value of the least deep element z_{G1} of the inserted graphic object.

Figure 3 shows an example of a screen displaying a 3D image. At the bottom of this image, an item of text information is inserted in this image inside an insertion window. The frame surrounding the inserted object has a certain thickness, typically 50 pixels. This frame defines a transition zone, and the central processing unit 3 will modify the disparity of pixels of the 3D image that are situated in this transition zone. All of the elements that represent textual information to be inserted are placed at a depth situated at the level of the screen plane. The elements situated on the interior edge of the frame and that belong to objects of the 3D image are placed at the depth close to that of the screen. The disparity value of pixels representing these elements corresponds to a first value close to zero, but positive. While the elements of the image situated on the exterior edge of the frame and that belong to objects of the 3D image conserve their initial disparity value. The values assigned by interpolation at the depth of intermediary pixels that are situated in the frame, change progressively between this first value and these initial values.

Figure 4 represents an example of interpolation to insert a graphic object in a 3D image, according to the vertical Y and horizontal X video axes. The axis Z represents the depth, the spectator being located at the value Z=0. In the zone of the graphic object to be inserted, the 3D image is situated at a depth "Zimage", the graphic object is inserted at a depth "Zscreen".

The left part at the bottom of figure 4 shows the screen seen by the spectator, the object inserted by the OSD circuit is located at the centre. The right part of figure 4 shows a view according to a vertical axis Y and the left part of figure 4 shows a view according to a horizontal axis X. The width of the frame surrounding the object is according to the Y axis: (Ya - Yb) = (Y'b - Y'a). The width of the frame surrounding the object is according to the X axis: (Xa - Xb) = (X'b - X'a). The width of the frame defines the width of the transition zone Z2. According to an improvement, the width of the frame according to the X axis is different to that of the Y axis. This difference is useful when the object to be inserted is extended in one direction and fine in another. The fact of being able to adjust the width of the transition zone also enables the depth variation to be smoothed when the inserted object is itself in 3D. In Ya, the elements of the 3D image are not modified. In Yb, the images are interpolated in such a way that the elements have a minimal depth equal to Zscreen. Between Ya and Yb (respectively Y'a and Y'b) the depth variation of elements is linear. The same reasoning applies to the axis of X.

In order to attenuate the visual disturbances related to the different depths of pixels situated on the frame, the variation can be gradual and parabolic.

According to an improvement, the user has a means of introduction of a depth value for the insertion of the graphic object with respect to that of the screen. This introduction means is presented in the aspect of a curser, the position of the curser selected by the user defines the position of objects to be inserted. The more the spectator disposes the object to be inserted in front of the screen, the more the 3D scene has depth. It is not necessary to enable the user to move the curser to the back of the screen as this would further limit the impression of depth. According to an improvement, the width of the interpolation zone depends on the adjustment introduced by the user. In fact, if the user moves his graphic object clearly in front of the screen, there is no need for a very wide interpolation zone to reduce visual discomfort.

For example, if the object to be inserted is a logo, the thickness of the frame can be limited to 30 pixels.

According to an improvement of the invention, a set of data relating to the object to be inserted is received by the receiver 1 comprising notably:
- the visual data of the object, possibly compressed,
- the position of the object to be inserted within the displayed image,
- the ratio between the distance of the object to be inserted and the screen, and the distance between the observer and the screen,
- the thickness of the frame.

The applications concerned by the present invention are all those that display a visual content on the screen and authorise the instantaneous or not display of an item of additional information. In the video games domain, the graphic object to be inserted could be the player's score. During live transmissions of sporting events, the score or details on particular players can thus be displayed. The display device 2 is typically a 3D television screen functioning with active or passive glasses, or a video projector, or any other item of equipment for displaying a 3D image.

In addition, the invention can be implemented not only in a device for reception of audiovisual transmissions but also in a transmission device. For example, it can be implemented at the level of a television company that wants to insert a logo permanently in the 3D content to be broadcast.

The present embodiments must be considered as being examples but can be modified in the domain defined by the scope of the attached claims. In particular, the invention can apply to any device for reception of digital audiovisual transmissions. The invention can notably be implemented in all technologies displaying three-dimensional images on any display means.

## Claims

1. Method for generation of at least one three-dimensional stereoscopic images pair comprising:
- a step of insertion of a graphic object in the at least one three-dimensional stereoscopic images pair at a predetermined insertion depth,
- a step of determination of a transition zone surrounding the inserted graphic object, said zone being delimited by an interior edge delimiting the graphic object and an exterior edge distant by a width of the transition zone from the interior edge,
the method being **characterized in that** said step of determination further comprises adapting the width of the transition zone based on a difference between a depth value of a first pixel of the inserted graphic object situated on said interior edge and a depth value of a second pixel of the at least one three-dimensional image situated on said exterior edge, and **in that** said method further comprises:
- a step of processing the depth of elements of the at least one one three-dimensional stereoscopic images pair situated in the transition zone, so that the depth varies gradually from the depth of the image elements situated on the exterior edge to the depth of the elements of the inserted graphic object of the interior edge.

2. Method for generation of at least one three-dimensional stereoscopic images pair according to claim 1, **characterized in that** said step of processing is adapted so that the depth applied to each element situated in said transition zone is increased step by step from the interior edge to the exterior edge of said transition zone.

3. Method for generation of at least one three-dimensional stereoscopic images pair according to claim 2, **characterized in that** step of processing further uses a function of the distance between the interior edge and the exterior edge of the zone, for determination of depths, the function being one of the following functions: linear, trigonometric or parabolic.

4. Method for generation of at least one three-dimensional stereoscopic images pair according to claim 1, **characterized in that** it comprises a step of reception of data associated with the graphic object, said received data comprising among other items of data the width of the transition zone around the inserted graphic object.

5. Device (1) for generation of three-dimensional stereoscopic images pair, comprising:
- means (13) for insertion of a graphic object in at least one three dimensional stereoscopic images pair,
said device being **characterized in that** it also comprises:
- means of determination (3, 4) of a transition zone surrounding the inserted graphic object, said zone being delimited by an interior edge corresponding to the contour of the graphic object and by an exterior edge distant by a width of a transition zone from the interior edge, said means further comprise means for adapting the width of the transition zone based on a difference between a depth value of a first pixel of the inserted graphic object situated on said interior edge and a depth value of a second pixel of the at least one three-dimensional image situated on said exterior edge,
- means for processing (13) the depth of elements of the at least one three dimensional stereoscopic images pair placed in the transition zone, so that the depth varies gradually from the depth of the image elements situated on the exterior edge to the depth of the elements of the inserted graphic object of the interior edge.

6. Device (1) for generation of three-dimensional stereoscopic images pair according to claim 5, **characterized in that** said means for processing are adapted so that the depth applied to each element situated in said transition zone is increased step by step from the interior edge to the exterior edge of said transition zone .

7. Device (1) for generation of three-dimensional stereoscopic images pair according to claim 6, **characterized in that** said means for processing uses a function of the distance between the interior edge and the exterior edge of the zone, for determination of depths, the function being one of the following functions: linear, trigonometric or parabolic.

8. Device (1) for generation of three-dimensional stereoscopic images pair according to claim 5, **characterized in that** it comprises means for receiving data associated with the graphic object, said received data comprising among other items of data the width of the transition zone around the inserted graphic object.

## Patentansprüche

1. Verfahren zur Erzeugung mindestens eines Paars dreidimensionaler stereoskopischer Bilder, wobei das Verfahren umfasst:
- einen Schritt des Einfügens eines Graphikobjekts in das mindestens eine Paar dreidimensionaler stereoskopischer Bilder in einer vorgegebenen Einfügetiefe,
- einen Schritt des Bestimmens einer Übergangszone, die das eingefügte Graphikobjekt umgibt, wobei die Zone durch einen Innenrand, der das Graphikobjekt begrenzt, und durch einen Außenrand, der durch eine Breite der Übergangszone von dem Innenrand entfernt ist, begrenzt ist,
wobei das Verfahren **dadurch gekennzeichnet ist, dass** der Schritt des Bestimmens ferner das Anpassen der Breite der Übergangszone auf der Grundlage einer Differenz zwischen einem Tiefenwert eines ersten Pixels des eingefügten Graphikobjekts, das sich auf dem Innenrand befindet, und einem Tiefenwert eines zweiten Pixels des mindestens einen dreidimensionalen Bilds, das sich auf dem Außenrand befindet, umfasst, und dadurch, dass das Verfahren ferner umfasst:
- einen Schritt des Verarbeitens der Tiefe von Elementen des mindestens einen Paars dreidimensionaler stereoskopischer Bilder, die sich in der Übergangszone befinden, in der Weise, dass sich die Tiefe von der Tiefe der Bildelemente, die sich auf dem Außenrand befinden, zu der Tiefe der Elemente des eingefügten Graphikobjekts des Innenrands allmählich ändert.

2. Verfahren zur Erzeugung mindestens eines Paars dreidimensionaler stereoskopischer Bilder nach Anspruch 1, **dadurch gekennzeichnet, dass** der Schritt des Verarbeitens so ausgelegt ist, dass die auf jedes Element, das sich in der Übergangszone befindet, angewendete Tiefe von dem Innenrand zu dem Außenrand der Übergangszone schrittweise erhöht wird.

3. Verfahren zur Erzeugung mindestens eines Paars dreidimensionaler stereoskopischer Bilder nach Anspruch 2, **dadurch gekennzeichnet, dass** der Schritt des Verarbeitens zur Bestimmung der Tiefen ferner eine Funktion der Entfernung zwischen dem Innenrand und dem Außenrand der Zone verwendet, wobei die Funktion eine der folgenden Funktionen ist: eine lineare, eine trigonometrische oder eine parabolische.

4. Verfahren zur Erzeugung mindestens eines Paars dreidimensionaler stereoskopischer Bilder nach Anspruch 1, **dadurch gekennzeichnet, dass** es einen Schritt des Empfangs dem Graphikobjekt zugeordneter Daten umfasst, wobei die empfangenen Daten unter anderen Datenelementen die Breite der Übergangszone um das eingefügte Graphikobjekt umfassen.

5. Vorrichtung (1) zur Erzeugung eines Paars dreidimensionaler stereoskopischer Bilder, wobei die Vorrichtung umfasst:
- Mittel (13) zur Einfügung eines Graphikobjekts in mindestens ein Paar dreidimensionaler stereoskopischer Bilder,
wobei die Vorrichtung **dadurch gekennzeichnet ist, dass** sie außerdem umfasst:
- Mittel (3, 4) zur Bestimmung einer Übergangszone, die das eingefügte Graphikobjekt umgibt, wobei die Zone durch einen Innenrand, der dem Umriss des Graphikobjekts entspricht, und durch einen Außenrand, der durch eine Breite einer Übergangszone von dem Innenrand entfernt ist, begrenzt ist, wobei die Mittel ferner Mittel zum Anpassen der Breite der Übergangszone auf der Grundlage einer Differenz zwischen einem Tiefenwert eines ersten Pixels des eingefügten Graphikobjekts, das sich auf dem Innenrand befindet, und einem Tiefenwert eines zweiten Pixels des mindestens einen dreidimensionalen Bilds, das sich auf dem Außenrand befindet, umfassen,
- Mittel zur Verarbeitung (13) der Tiefe von Elementen des mindestens einen Paars dreidimensionaler stereoskopischer Bilder, die in der Übergangszone angeordnet sind, in der Weise, dass sich die Tiefe von der Tiefe der Bildelemente, die sich auf dem Außenrand befinden, zu der Tiefe der Elemente des eingefügten Graphikobjekts des Innenrands allmählich ändert.

6. Vorrichtung (1) zur Erzeugung eines Paars dreidimensionaler stereoskopischer Bilder nach Anspruch 5, **dadurch gekennzeichnet, dass** die Mittel zur Verarbeitung so ausgelegt sind, dass die auf jedes Element, das sich in der Übergangszone befindet, angewendete Tiefe von dem Innenrand zu dem Außenrand der Übergangszone schrittweise erhöht wird.

7. Vorrichtung (1) zur Erzeugung eines Paars dreidimensionaler stereoskopischer Bilder nach Anspruch 6, **dadurch gekennzeichnet, dass** das Mittel zur Verarbeitung zur Bestimmung der Tiefen eine Funktion der Entfernung zwischen dem Innenrand und dem Außenrand der Zone verwendet, wobei die Funktion eine der folgenden Funktionen ist: eine lineare, eine trigonometrische oder eine parabolische.

8. Vorrichtung (1) zur Erzeugung eines Paars dreidimensionaler stereoskopischer Bilder nach Anspruch 5, **dadurch gekennzeichnet, dass** sie Mittel zum Empfang dem Graphikobjekt zugeordneter Daten umfasst, wobei die empfangenen Daten unter anderen Datenelementen die Breite der Übergangszone um das eingefügte Graphikobjekt umfassen.

## Revendications

1. Procédé pour générer au moins une paire d'images stéréoscopiques en trois dimensions comprenant :
- une étape d'insertion d'un objet graphique dans la au moins une paire d'images stéréoscopiques en trois dimensions à une profondeur d'insertion prédéterminée,
- une étape de détermination d'une zone de transition entourant l'objet graphique inséré, ladite zone étant délimitée par un bord intérieur délimitant l'objet graphique et un bord extérieur distant d'une largeur de la zone de transition depuis le bord intérieur,
le procédé étant **caractérisé en ce que** ladite étape de détermination comprend en outre l'adaptation de la largeur de la zone de transition en fonction d'une différence entre une valeur de profondeur d'un premier pixel de l'objet graphique inséré situé sur ledit bord intérieur et une valeur de profondeur d'un second pixel de la au moins une image en trois dimensions situé sur ledit bord extérieur, et **en ce que** ledit procédé comprend en outre :
- une étape de traitement de la profondeur des éléments de la au moins une paire d'images stéréoscopiques en trois dimensions situés dans la zone de transition, de sorte que la profondeur varie progressivement de la profondeur des éléments d'image situés sur le bord extérieur à la profondeur des éléments de l'objet graphique inséré du bord intérieur.

2. Procédé pour générer au moins une paire d'images stéréoscopiques en trois dimensions selon la revendication 1, **caractérisé en ce que** ladite étape de traitement est adaptée de sorte que la profondeur appliquée à chaque élément situé dans ladite zone de transition soit augmentée pas à pas du bord intérieur au bord extérieur de ladite zone de transition.

3. Procédé pour générer au moins une paire d'images stéréoscopiques en trois dimensions selon la revendication 2, **caractérisé en ce que** l'étape de traitement utilise en outre une fonction de la distance entre le bord intérieur et le bord extérieur de la zone, pour la détermination des profondeurs, la fonction étant l'une des fonctions suivantes : linéaire, trigonométrique ou parabolique.

4. Procédé pour générer au moins une paire d'images stéréoscopiques en trois dimensions selon la revendication 1, **caractérisé en ce qu'**il comprend une étape de réception de données associées à l'objet graphique, lesdites données reçues comprenant parmi d'autres éléments de données la largeur de la zone de transition autour de l'objet graphique inséré.

5. Dispositif (1) pour générer une paire d'images stéréoscopiques en trois dimensions, comprenant :
- un moyen (13) pour insérer un objet graphique dans au moins une paire d'images stéréoscopiques en trois dimensions,
ledit dispositif étant **caractérisé en ce qu'**il comprend également :
- un moyen pour déterminer (3, 4) une zone de transition entourant l'objet graphique inséré, ladite zone étant délimitée par un bord intérieur correspondant au contour de l'objet graphique et par un bord extérieur distant d'une largeur d'une zone de transition depuis le bord intérieur, ledit moyen comprenant en outre un moyen pour adapter la largeur de la zone de transition en fonction d'une différence entre une valeur de profondeur d'un premier pixel de l'objet graphique inséré situé sur ledit bord intérieur et une valeur de profondeur d'un second pixel de la au moins une image en trois dimensions situé sur ledit bord extérieur,
- un moyen pour traiter (13) la profondeur des éléments de la au moins une paire d'images stéréoscopiques en trois dimensions placés dans la zone de transition, de sorte que la profondeur varie progressivement de la profondeur des éléments d'image situés sur le bord extérieur à la profondeur des éléments de l'objet graphique inséré du bord intérieur.

6. Dispositif (1) pour générer une paire d'images stéréoscopiques en trois dimensions selon la revendication 5, **caractérisé en ce que** ledit moyen traitement est adapté de sorte que la profondeur appliquée à chaque élément situé dans ladite zone de transition soit augmentée pas à pas du bord intérieur au bord extérieur de ladite zone de transition.

7. Dispositif (1) pour générer une paire d'images stéréoscopiques en trois dimensions selon la revendication 6, **caractérisé en ce que** ledit moyen de traitement utilise une fonction de la distance entre le bord intérieur et le bord extérieur de la zone, pour la détermination des profondeurs, la fonction étant l'une des fonctions suivantes : linéaire, trigonométrique ou parabolique.

8. Dispositif (1) pour générer une paire d'images stéréoscopiques en trois dimensions selon la revendication 5, **caractérisé en ce qu'**il comprend un moyen pour recevoir des données associées à l'objet graphique, lesdites données reçues comprenant parmi d'autres éléments de données la largeur de la zone de transition autour de l'objet graphique inséré.
